# EUROPÄISCHE PATENTSCHRIFT

(11) **EP 0 363 564 B1**
(45) Veröffentlichungstag und Bekanntmachung des Hinweises auf die Patenterteilung: **18.08.1993**
(21) Anmeldenummer: 89110441.6
(22) Anmeldetag: 09.06.1989
(51) Int. Cl.: H02B 11/173

(54) **Nebenstromkreise für einen Schaltereinschub**
Secondary circuit for a slide in a switch
Circuit secondaire pour un interrupteur embrochable

(30) Priorität: 10.10.1988 DE 3834363; 13.10.1988 DE 3834820
(43) Veröffentlichungstag der Anmeldung: 18.04.1990
(60) Teilanmeldung: 92116516.3
(73) Patentinhaber: Licentia Patent-Verwaltungs-GmbH, 60596 Frankfurt (DE)
(72) Erfinder: Krafft, Henning, Dipl.-Ing., D-2350 Neumünster (DE); Grahlmann, Klaus, D-2350 Neumünster (DE); Grimm, Jörn, Dipl.-Ing., D-2302 Böhnhusen (DE)
(74) Vertreter: Vogl, Leo, Dipl.-Ing.

(56) Entgegenhaltungen:
- EP-A- 0 133 152
- EP-A- 0 236 179
- FR-A- 1 066 099
- US-A- 4 012 610
- US-A- 4 477 701

## Beschreibung

Die Erfindung betrifft Nebenstromkreise für einen Schaltereinschub gemäß dem Oberbegriff des Anspruchs 1.

Aus der US-PS 31 88 415 ist eine Einschubvorrichtung bekannt, bei der an einem verfahrbaren Hauptkontaktträger Nebenstromkreiskontakte oberhalb der Hauptkontakte befestigt sind, die über die Hauptkontakte hinausragen und beim Einschalten des Einschubgerätes vor dem Schließen der Hauptkontakte auf Kontaktstiften gleiten, die am Einschubgerät befestigt sind. Die Kontaktbahnen und Kontaktstifte dieser bekannten Nebenstromkreisverbindung sind kontaktmindernd Umgebungseinflüssen und mechanischen Beschädigungen ausgesetzt.

Weiterhin offenbart die US 4,477,701 eine Schaltungsanordnung, bei der ein Kontaktblock von Hand in die Stellungen "EIN", "AUS" und "TEST" geradlinig verschiebbar ist. Hierbei ist aber keine Steuerplatte vorgesehen, durch die eine Nebenstromkreisverbindung in oder außer Eingriff bringbar ist.

Der Anbau der bekannten Nebenstromkreisverbindungen erfolgte bisher an der Rückwand der Einschubvorrichtungen, was für verschieden breite Einschubvorrichtungen jeweils andere Anbauten erfordert.

Der Erfindung liegt die Aufgabe zugrunde, eine sichere Nebenstromkreisverbindung für eine Einschubtechnik mit verfahrbarem Hauptkontaktträger zu schaffen, welche die Einbauhöhe der Einschübe nicht beeinflußt.

Diese Aufgabe wird erfindungsgemäß durch die im Kennzeichen des Anspruchs 1 angegebenen Merkmale gelöst.

Die Erfindung hat den Vorteil, daß eine sichere Nebenstromkreisverbindung über preiswerte und standardisierte Buchsen- und Steckerleisten hergestellt ist, deren Kontakte weitgehend gegen Umgebungseinflüsse geschützt sind. Ein weiterer Vorteil liegt in der seitlichen Anordnung der Nebenstromkreisverbindung, die den Einsatz der Verbindung in unterschiedlich breiten Einschüben ermöglicht.

Vorteilhafte Weiterbildungen sind in den Unteransprüchen angegeben.

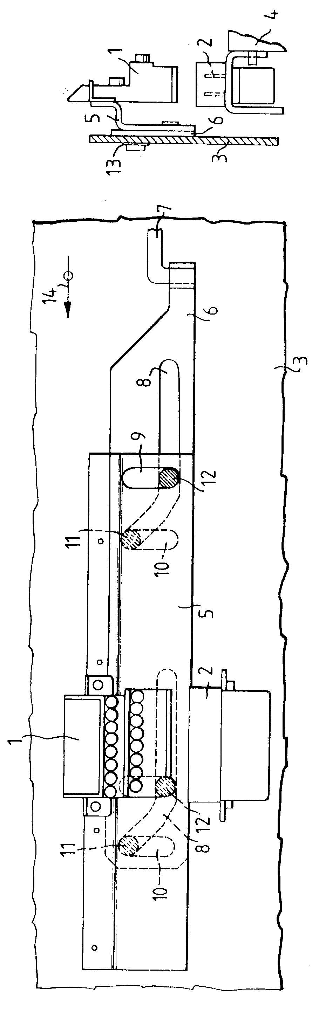

Anhand der Zeichnung wird ein Ausführungsbeispiel der Erfindung näher erläutert.

Die Figur zeigt eine Nebenstromkreisverbindung in Vorderansicht und geschnittener Seitenansicht mit einer Trägerplatte 5 für die Buchsenleiste 1, einer Steuerplatte 6, einem Verbindungselement 7, mit dem die Steuerplatte 6 an einen nicht dargestellten, im Einschubträger Verfahrbaren, Hauptkontaktträger angelenkt ist. MIt dem Hauptkontaktträger werden in bekannter Weise die Hauptstromkreisverbindungen zwischen einem Einschubgerät 4 und Sammelschienen des Schaltschrankes hergestellt. Die Nebenstromkreisverbindung besitzt weiterhin die Steuerschlitze 8 in der Steuerplatte 6, Langlochführungen 9 in der Trägerplatte 5, Langlochführungen 10 in der Seitenwand 3 des Einschubträgers, Zapfen 11 in der Trägerplatte 5 und Zapfen 12 in der Seitenwand 3 des Einschubträgers. Die Steuerplatte 6 und die Trägerplatte 5 sind über die Zapfen 11, 12 verschiebbar an der Seitenwand 3 gehalten, wobei die Trägerplatte 5 nur eine Bewegung in vertikaler und die Steuerplatte 6 nur eine Bewegung in horizontaler Richtung ausführen kann. Die Steuerplatte 6 ist zwischen Seitenwand 3 und Trägerplatte 5 angeordnet. Die an der Trägerplatte 5 befestigten Zapfen 11 durchdringen einen schrägwinkligen Schlitzabschnitt der Steuerschlitze 8 und die Langlöcher 10 in der Seitenwand 3. An ihren freien Enden sind sie mit Sprengringen 13 versehen, die auf der Außenseite der Seitenwand 3 aufliegen und so die Steuerplatte 6 und die Trägerplatte 5 an der Seitenwand halten. Die an der Seitenwand 3 befestigten Zapfen 12 durchdringen die Steuerschlitze 8 in ihrem horizontalen Schlitzabschnitt und Langlöcher 9 in der Trägerplatte 5. Durch die Zapfen 12 in Verbindung mit den Steuerschlitzen 8 und den Langlöchern 9 in der Trägerplatte 5 sind die vertikalen und horizontalen Bewegungskoordinaten der Steuer- und Trägerplatte 5, 6 festgelegt. Mittels der Zapfen 11 wird die horizontale Bewegung der Steuerplatte 6 in eine vertikale Bewegung der Trägerplatte 5 umgelenkt. Durch die Neigung des schrägwinkligen Schlitzabschnittes der Steuerschlitze 8 und die Länge der Langlöcher 9 kann der Hub der Buchsenleiste 1 so bemessen werden, daß ein sicheres Schließen und ausreichendes Öffnen der Nebenstromkreisverbindung erreicht wird. Die Nebenstromkreisverbindung muß so weit öffnen, daß die Buchsenleiste 1 vollständig aus der Steckerleiste 2 ausgefahren ist. Die Buchsenleisste 1 ist auf der Trägerplatte 5 justierbar befestigt, so daß nach einer Justierung die Buchsenleiste 1 und die Steuerleiste 2 gut ineinandergleiten können. Der schrägwinklige und horizontale Schlitzabschnitt der Steuerschlitze 8 ist so aufeinander abgestimmt, daß die Nebenstromkreisverbindung zwischen den Betriebsstellungen AUS und TEST des Einschubgerätes 4 in der Schließ- und Öffnungsphase und zwischen den Betriebsstellungen TEST-EIN-TEST geschlossen ist.

## Patentansprüche

1. Nebenstromkreisverbindung für einen Schaltereinschub, die an einen im Einschubträger verfahrbaren Hauptkontaktträger angelenkt ist, mit dem die Hauptstromkreisverbindungen zwischen einem feststehenden Schaltereinschub und Sammelschienen des Schaltschrankes hergestellt wird, wobei die Nebenstromkreisverbindung aus einer an der Seitenwand (3) des Einschubträgers angeordneten, absenk- und anhebbaren Buchsenleiste (1), einer damit korrespondierenden starr am Einschubgerät (4) befestigten Steckerleiste (2) und einem Hebelmechanismus (5, 6, 11, 12) zum Absenken, Heben oder Verharren der Buchsenleiste (1) in Abhängigkeit von Betriebsstellungen AUS-TEST-EIN des Einschubgerätes (4) besteht, dadurch gekennizeichnet, daß der Hebelmechanismus aus einer Trägerplatte (5) für die Buchsenleiste (1), einer Steuerplatte (6) und in der Trägerplatte (5) bzw. Seitenwand (3) befestigten Zapfen (11) bzw. (12) besteht, und daß die Steuerplatte (6) zwischen der Seitenwand (3) und der Trägerplatte (5) derart angeordnet ist, daß durch die Bewegung dieser Steuerplatte (6) die Nebenstromkreisverbindung in oder außer Eingriff bringbar ist.

2. Nebenstromkreisverbindung nach Anspruch 1, **dadurch gekennzeichnet,** daß die Steuerplatte (6) Steuerschlitze (8) mit einem horizontalen und einem schrägwinkligem Schlitzabschnitt aufweist, daß in der Trägerplatte (5) und in der Seitenwand (3) vertikal angeordnete Langlochführungen (9, 10) enthalten sind, daß die Zapfen (11) der Trägerplatte (5) die Steuerschlitze (8) in ihrem schrängwinkligem Schlitzabschnitt und durch die Langlöcher (10) der Seitenwand (3) durchdringen, daß die Zapfen (12) der Seitenwand (3) die Steuerschlitze (8) in ihrem horizontalen Schlitzabschnitt und die Langlöcher (9) der Trägerplatte (5) durchdringen, und daß die Steuerplatte (6) eine horizontale Bewegung entsprechend dem in der Zeichnung gezeigten Richtungspfeil (14) ausführt.

3. Nebenstromkreisverbindung nach Anspruch 2, **dadurch gekennzeichnet,** daß die Zapfen (11) in dem Betriebsbereich TEST-EIN-TEST des Einschubgerätes (4) im horizontalen Schlitzabschnitt der Steuerschlitze (8) gleiten und sich in der Betriebsstellung AUS und zwischen den Betriebsstellungen AUS-TEST-AUS im schrängwinkligem Schlitzabschnitt der Steuerschlitze (8) befinden.

4. Nebenstromkreisverbindung nach Anspruch 2 oder 3, **dadurch gekennzeichnet,** daß die Steuerplatte (6) und die Trägerplatte (5) über die Zapfen (11) mittels Sprengringen (13), die auf den freistehenden Enden der Zapfen(11) sitzen, an der Seitenwand (3) gehalten sind.

## Claims

1. Secondary circuit for a switch plug-in component, which is pivoted to a main contact carrier which is movable in the plug-in carrier and by which the main circuit connections between a stationary switch plug-in component and bus bars of the switch gear is produced, wherein the secondary circuit connection consists of a raisable and lowerable socket strip (1) arranged at the side wall (3) of the plug-in carrier, a plug strip (2) rigidly fastened to the plug-in apparatus (4) and corresponding to the socket strip, and a lever mechanism (5, 6, 11, 12) for lowering, raising or keeping in place the socket strip (1) in dependence on operational settings OFF-TEST-ON of the plug-in apparatus (4), characterised thereby that the lever mechanism consists of a carrier plate (5) for the socket strip (1), a control plate (6) and pins (11 and 12) fastened in, respectively, the carrier plate (5) and side wall (3), and that the control plate (6) is arranged between the side wall (3) and the carrier plate (5) in such a manner that the secondary circuit connection can be brought into or taken out of effect by the movement of this control plate (6).

2. Secondary circuit connection according to claim 1, characterised thereby that the control plate (6) has control slots (8) with a horizontal and an obliquely angled slot section, that vertically arranged elongate hole guides (9, 10) are contained in the carrier plate (5) and in the side wall (3), that the pins (11) of the carrier plate (5) penetrate through the control slots (8) in their obliquely angled slot section and through the elongate holes (10) of the side wall (3) penentrate through the control slots (8) in their horizontal slot section and the elongate holes (9) of the carrier plate (5), and that the control plate (6) executes a horizontal movement corresponding to the directional arrow (14) shown in the drawing.

3. Secondary circuit connection according to claim 2, characterised thereby that the pins (11) slide in the horizontal slot section of the control slots (8) in the operational range TEST-ON-TEST of the plug-in apparatus (4) are disposed in the obliquely angled slot section of the control slots (8) in the operational setting OFF and between the operational settings OFF-TEST-OFF.

4. Secondary circuit connection according to claim 2 or 3, characterised thereby that the control plate (6) and the carrier plate (5) are held at the side wall (3) by way of the pins (11) by means of circlips (13), which are seated on the exposed ends of the pins (11).

## Revendications

1. Connexion de circuit dérivé ou secondaire pour un rack d'interrupteurs, laquelle est articulée sur un porte-contact principal mobile dans le support de rack et établit les connexions de circuit principal entre un rack d'interrupteurs fixe et des barres omnibus de l'armoire de distribution, la connexion de circuit dérivé étant constituée d'une réglette à douilles (1) mobile vers le bas et vers le haut, disposée sur la paroi latérale (3) du support de rack, d'une réglette à fiche (2) correspondante, fixée rigidement à l'appareil en rack (4), et d'un mécanisme à levier (5, 6, 11, 12) pour abaisser, lever ou maintenir la réglette à douilles (1) en fonction des positions de fonctionnement Arrêt-Test-Marche de l'appareil en rack (4), caractérisée en ce que le mécanisme à levier se compose d'une plaque support (5) pour la réglette à douille (1), d'une plaque de commande (6) et de tenons (11, respectivement 12) fixés dans la plaque-support (5), respectivement dans la paroi latérale (3) et, en ce que la plaque de commande (6) est disposée entre la paroi latérale (3) et la plaque-support (5) de sorte que, par le mouvement de cette plaque support (6), la connexion de circuit dérivé peut être enclenchée ou désenclenchée.

2. Connexion de circuit dérivé selon la revendication 1, caractérisée en ce que la plaque de commande (6) présente des fentes de commande (8) comprenant un segment de fente horizontal et un segment de fente à angle oblique, en ce que la plaque-support (5) et la paroi latérale (3) comprennent des guidages en forme de trous longitudinaux (9, 10), en ce que les tenons (11) de la plaque-support (5) pénètrent la fente de commande (8) dans son segment de fente à angle oblique et traversent les trous longitudinaux (10) de la paroi latérale (3), en ce que les tenons (12) de la paroi latérale (3) pénètrent la fente de commande (8) dans son segment de fente horizontal et traverse les trous longitudinaux (9) de la plaque-support (5) et, en ce que la plaque de commande (6) exécute un mouvement horizontal correspondant au sens de la flèche (14) montrée sur le dessin.

3. Connexion de circuit dérivé selon la revendication 2, caractérisée en ce que les tenons (11) coulissent dans le segment de fente horizontal de la fente de commande (8), quand l'appareil en rack (4) est dans la zone de position de fonctionnement Test-Marche-Test et, se trouvent dans le segment de fente à angle oblique de la fente de commande (8) pendant la position de fonctionnement Arrêt et entre les positions de fonctionnement Arrêt-Test-Arrêt.

4. Connexion de circuit dérivé selon la revendication 2 ou 3, caractérisée en ce que la plaque de commande (6) et la plaque-support (5) sont maintenues sur la paroi latérale (3) au-dessus des tenons (11) à l'aide de bague élastiques (13) se trouvant sur les extrémités libres des tenons (11).
